# EUROPÄISCHE PATENTANMELDUNG

(11) **EP 4 620 275 A1**
(43) Veröffentlichungstag der Anmeldung: **24.09.2025**
(21) Anmeldenummer: 25162643.8
(22) Anmeldetag: 10.03.2025
(51) Int. Cl.: A01B 49/06, A01B 63/11, A01B 73/04, A01C 7/20

(54) **LANDWIRTSCHAFTLICHE BESTELLKOMBINATION**

(30) Priorität: 12.03.2024 DE 102024107064
(71) Anmelder: Lemken GmbH & Co KG, 46519 Alpen (DE)
(72) Erfinder: Groß-Bölting, Stephan, 46414 Rhede (DE); Ossing, Roman, 46348 Raesfeld (DE)

(57) **Zusammenfassung**

Es wird eine Säkombination (1), bestehend aus einem Bodenbearbeitungsgerät (3) und einer Verteilmaschine (4) vorgeschlagen. Durch Anordnung eines Fahrwerkes (8) an einen beweglichen Werkzeugrahmen (6) der Verteilmaschine wird eine wesentliche leichtere, einfachere und kostengünstigere Fahrwerksauslegung ermöglicht, als dieses bei Anordnung des Fahrwerkes direkt am Bodenbearbeitungsgerät der Säkombination der Fall wäre. Da das Fahrwerk lediglich zur Hinterachsentlastung des Traktors bei Kopplung der gesamten Säkombination (1) erforderlich ist, nicht jedoch zum Einzel- oder Solobetrieb des Bodenbearbeitungsgerätes, kann dieses durch die lösbare Verbindung zwischen Bodenbearbeitungsgerät und Verteilmaschine an letzterem montiert bleiben und mit diesem gemeinsam abgestellt werden.

## Beschreibung

Die Erfindung betrifft eine landwirtschaftliche Bestellkombination gemäß dem Oberbegriff des Patentanspruches 1.

Die Anmeldung EP 1 466 516 A1 zeigt eine für die Transportfahrt klappbare Kreiselegge mit einer daran angebauten Walze sowie einer dahinter angeordneten Säschiene zur Aussaat von Pflanzensamen, insbesondere Raps und Getreide. Aufgrund des erhöhten Gesamtmaschinengewichtes, welches durch die an die Kreiselegge montierte Säschiene und deren hintere Ausladung entsteht, werden die im Straßenverkehr zulässigen Achslasten des Traktors überschritten, welche die Kreiselegge mit der montierten Säschiene in seinem Dreipunkthubwerk trägt. Aus diesem Grund ist am hinteren Ende der Kreiselegge ein schwenkbares Hilfsfahrwerk angeordnet, welches in Transportstellung einen Teil des Gewichtes auf dem Boden abstützt und somit den Hubkraftbedarf und die zulässigen Achslasten des Traktors verringert. Analog ist eine klappbare Kreiselegge mit daran angebauter Säschiene in DE10224861A1 vorgeschlagen.

EP 2289295 A1 zeigt eine klappbare Kreiselegge mit dahinter angeordneten Einzelkornsäaggregaten. In den zwischen den Einzelkornsäaggregaten verbleibenden Freiräumen sind Laufräder anstelle einer Tiefenführungswalze an der Kreiselegge angeordnet. Bis auf ein mittleres Rad schwenken diese gemeinsam mit den Einzelkornsäaggregaten in eine aufrechte Stellung. Das mittlere Rad verbleibt am Anbaurahmen der Kreiselegge und übernimmt die weiter oben beschriebene Funktion eines Hilfsfahrwerkes. Ein zur Mitführung von Saatgut und/oder Dünger vorgesehener Behälter ist frontseitig am Traktor angeordnet und übernimmt zugleich die Funktion eines Kontergewichtes.

Den aus dem Stand der Technik beschriebenen Geräten ist gemein, dass deren Säschienen bzw. Säaggregate direkt an den Klappsegmenten der Kreiseleggen montiert sind und gemeinsam mit diesen in Transportstellung geklappt werden können, jedoch nur aufwendig für einen Solobetrieb der Kreiselegge zur alleinigen Bodenbearbeitung demontiert werden müssen.

Aufgabe der Erfindung ist es, eine modulare Bestellkombination bereit zu stellen, welche einen flexiblen und kostengünstigen Wechsel zwischen Solo- und Kombinationsbetrieb ermöglicht und ein vereinfachtes Fahrwerk zur Entlastung der Traktorhinterachse bereitstellt.

Diese Aufgabe wird durch die Merkmale des kennzeichnenden Teiles des Anspruches 1 gelöst. Weitere Vorteile werden in den nachfolgenden Ansprüchen behandelt.

Eine landwirtschaftliche Bestellkombination ist zum Anbau an die Hubvorrichtung eines Traktors vorgesehen Die Bestellkombination weist zumindest ein Bodenbearbeitungsgerät und eine Verteilmaschine auf, wobei die Verteilmaschine einen Koppelrahmen aufweist, welcher lösbar mit dem Bodenbearbeitungsgerät verbunden ist. Weiterhin weist die Verteilmaschine mehrere an einem Werkzeugrahmen angeordnete Ausbringwerkzeuge auf. Dabei ist am Werkzeugrahmen ein Fahrwerk angeordnet. Zudem sind der Werkzeugrahmen und/oder die Verteilmaschine beweglich über den Koppelrahmen mit dem Bodenbearbeitungsgerät verbunden. Durch diese bewegliche Anordnung kann zumindest ein großer Teil des Gewichtes der auf Verteilmaschine oder seine Werkzeugrahmen und der daran angeordneten Ausbringwerkzeuge auf dem Fahrwerk abgestützt werden, während der verbleibende Gewichtsteil, insbesondere der des Bodenbearbeitungsgerätes oder seiner Teile vorwiegend durch die Hubvorrichtung des Traktors getragen wird und somit auf dessen Hinterachse lastet. Unebenheiten im Fahrbahnverlauf sowie andere fahrdynamische Bewegungen, welche das Fahrwerk am Werkzeugrahmen unvorhergesehen vom Boden abheben oder dieses überlasten, werden durch die bewegliche Anordnung der Verteilmaschine bzw. ihres Werkzeugrahmens am Koppelrahmen bzw. dem Bodenbearbeitungsgerät kompensiert. Somit werden gefährliche und unfallträchtige Zustände vermieden, welche in einer starren Verbindung sonst auftreten würden. Weiterhin kann das Fahrwerk nach dem Lösen der Verteilmaschine an dessen Werkzeugrahmen verbleiben, während das Bodenbearbeitungsgerät allein in der Hubvorrichtung eines Traktors betrieben werden kann. Aufgrund des im Vergleich zur gesamten Säkombination geringeren Gewichtes kann dies allein und ohne sonst notwendiges Fahrwerk in der Hubvorrichtung des Traktors getragen werden, ohne dessen zulässige Achslasten zu überschreiten.

In einer erweiterten Erfindungsform der landwirtschaftlichen Bestellkombination weist die Verteilmaschine zumindest einen Materialbehälter auf. Dabei ist der Materialbehälter über den Koppelrahmen fest mit dem Bodenbearbeitungsgerät und der Werkzeugrahmen beweglich über den Koppelrahmen mit Bodenbearbeitungsgerät oder dem Materialbehälter verbunden.

Durch diese Anordnung kann auch der Materialbehälter gemeinsam mit der Verteilmaschine vom Bodenbearbeitungsgerät entkoppelt werden und dieses ohne notwendiges Fahrwerk für den Solobetrieb vom Traktor getragen werden.

In einer weiteren Erfindungsform der landwirtschaftlichen Bestellkombination weisen das Bodenbearbeitungsgerät und der Werkzeugrahmen der Verteilmaschine jeweils klappbare Segmente auf. Bevorzugt schwenken die jeweiligen Segmente des Bodenbearbeitungsgerätes und des Werkzeugrahmens der Verteilmaschine von einer sich quer zur Arbeitsrichtung der Bestellkombination erstreckenden Arbeitsstellung in eine aufrechte Transportstellung. Damit kann die Bestellkombination von einer größeren Arbeitsbreite, in der die Werkzeuge des Bodenbearbeitungsgerätes und die Ausbringwerkzeuge der Verteilmaschine mit der Bodenoberfläche in Verbindung stehen, in eine geringere, für den Straßenverkehr zulässige Transportbreite verringert werden. Bevorzugt weist der Werkzeugrahmen einen Mittelrahmen auf, an welchem zumindest ein linkes und rechtes Segment mit Ausbringwerkzeugen schwenkbar angeordnet ist. Weiter bevorzugt ist das Fahrwerk dem Mittelrahmen des Werkzeugrahmens zugeordnet und verbleibt dort unabhängig von der Schwenkbewegung der Segmente der Werkzeugrahmen. Alternativ können die Segmente des Werkzeugrahmens auch einzelne Fahrwerke aufweisen, welche in Transportstellung der Segmente Bodenkontakt aufweisen. Der Mittelrahmen ist wiederum beweglich am Koppelrahmen angeordnet, welcher wiederum starr, jedoch lösbar mit dem Bodenbearbeitungsgerät verbunden ist.

Ergänzend ist die landwirtschaftliche Bestellkombination derart ausgeführt, dass die Segmente des Bodenbearbeitungsgerätes und/oder die Segmente des Werkzeugrahmens den Materialbehälter der Verteilmaschine in aufrechter Transportposition einschließend angeordnet sind. Durch geschickte Formgebung des Behältervolumens des Materialbehälters und insbesondere seiner seitlichen Erstreckung kann dieser schwerpunktgünstig oberhalb des Koppelrahmens und in der Nähe des Traktors angeordnet werden, während die einzelnen Segmente des Bodenbearbeitungsgerätes und/oder die Segmente des Werkzeugrahmens der Verteilmaschine rechts und links daneben klappen, ohne die zulässige Transportbreite der Bestellkombination zu überschreiten.

In einer weiteren vorteilhaften Ausbildung der landwirtschaftlichen Bestellkombination ist das Fahrwerk von einer Arbeitsposition in Transportposition und umgekehrt verstellbar ausgebildet. Dabei nimmt das Fahrwerk in Transportposition eine abgesenkte Bodenkontaktstellung ein und in Arbeitsposition eine ausgehobene Stellung ein, um eine Kollision mit den Ausbringwerkzeugen zu vermeiden. Bevorzugt ist das Fahrwerk in Transportposition zwischen den aufrecht geklappten Segmenten des Werkzeugrahmens und in Arbeitsposition oberhalb der geklappten Segmente des Werkzeugrahmens bzw. der daran angeordneten Ausbringwerkzeuge angeordnet. Weiterhin vorteilhaft beinhaltet die landwirtschaftliche Bestellkombination, dass das Fahrwerk zumindest ein lenkbares Rad aufweist. Durch die Anordnung zumindest eines lenkbaren Rades am Fahrwerk der Bestellkombination kann der Fahrer des Traktors wie mit einem Anbaugerät gewohnt im Transportbetrieb lenken und rangieren. Das lenkbare Rad ist bevorzugt um eine vertikale Achse lenkbar und weiter bevorzugt als nachlaufendes, frei lenkbares Rad ausgebildet. Bevorzugt kann dem Rad eine Feder oder ein Energiespeicher zugeordnet werden, welcher der freien Lenkbewegung des Rades um die vertikale Achse entgegenwirkt und insbesondere bei höheren Fahrgeschwindigkeiten ein seitliches Ausscheren der Bestellkombination verhindert und Unfälle vermeidet. Bei einer solchen Anordnung kann die Bestellkombination bei Rückwärtsfahrt dann gemeinsam mit seinem Fahrwerk vorzugsweise mit der Hubeinrichtung des Traktors oder das Fahrwerk alleine über das Lenkergestänge oder einen einzelnen Aktor zuvor ausgehoben werden.

In einer erweiterten Erfindungsform der landwirtschaftlichen Bestellkombination ist der Werkzeugrahmen mittels eines Lenkergestänges höhenverstellbar am Koppelrahmen angeordnet, welcher einen feststehenden und mit dem Bodenbearbeitungsgerät lösbar verbundenen Teil der Verteilmaschine bildet. Hierdurch können die Arbeitstiefe des Bodenbearbeitungsgerätes und der Verteilwerkzeuge der Verteilmaschine unabhängig voneinander eingestellt werden. Insbesondere bei beweglicher Anlenkung der Verteilwerkzeuge am Werkzeugrahmen und weiter bevorzugt einer gefederten Anlenkung der Verteilwerkzeuge am Werkzeugrahmen kann deren Stellung zur Bodenoberfläche zentral durch Bewegung des Werkzeugrahmens erzielt werden.

In einer alternativen oder ergänzenden Erfindungsform der landwirtschaftliche Bestellkombination ist der Werkzeugrahmen mittels eines Lenkergestänges im Winkel um eine parallel zur Erstreckung des Werkzeugrahmens verlaufenden Achse einstellbar am Koppelrahmen angeordnet. Auch durch diese Einstellmöglichkeit kann die Stellung der Verteilwerkzeuge relativ zur Bodenoberfläche zentral über den Werkzeugrahmen vorgenommen werden, indem dieser um eine liegende Achse, welche entlang seiner Erstreckung über die Arbeitsbreite der Bestellkombination verläuft, verdreht oder im Winkel zur Bodenoberfläche eingestellt wird. Bevorzugt erfolgt die Winkeleinstellung in Stufen oder stufenlos über eine längenveränderliche Strebe, weiter bevorzugt über zumindest einen längenveränderlichen Lenker eines Lenkergestänges, mit welchem zugleich die Höhe des Werkzeugrahmens relativ zur Bodenoberfläche und zum vorlaufenden Bodenbearbeitungsgerät eingestellt werden kann.

In einer bevorzugten Erfindungsform der landwirtschaftlichen Bestellkombination weist das Lenkergestänge zumindest einen Energiespeicher auf, welcher den feststehenden Teil der Verteilmaschine mit dem beweglichen Werkzeugrahmen verbindet. Bevorzugt ist der Energiespeicher als Zug- Druck-, Torsions- oder Blattfeder, als Elastomerkörper oder als hydropneumatischer Federzylinder ausgebildet. Hierdurch weist das Fahrwerk, welches an dem Werkzeugrahmen angeordnet ist, mittels des beweglichen Lenkergestänges federnde Eigenschaften auf, welches Bodenunebenheiten, die beim Transportbetrieb der Bestellkombination auftreten, ausgleicht und eine Überlastung des Fahrwerkes oder des Lenkergestänges vermeidet. Weiterhin kann durch Auswahl einer geeigneten Federkraft oder Federrate des Energiespeichers der Anteil der Gewichtskraft der Bestellkombination, welche auf dem Fahrwerk lastet, variabel eingestellt werden. So kann die Hinterachsentlastung des Traktors auf einen zulässigen Wert begrenzt, insbesondere an deren obere zulässige Grenze, eingestellt werden. Entsprechend leicht und günstig kann das Fahrwerk konstruktiv ausgelegt werden.

In einer weiteren Erfindungsform der landwirtschaftlichen Bestellkombination weist das Lenkergestänge zumindest einen Aktor auf, welcher den feststehenden Teil der Verteilmaschine mit dem beweglichem Werkzeugrahmen verbindet. Hierdurch kann eine Höhen- und / oder Winkeleinstellung des Werkzeugrahmens relativ zum Bodenbearbeitungsgerätes bequem mit Fremdenergie und / oder fernbetätigt erfolgen. Bevorzugt erfolgt die Energieversorgung und die Betätigung vom Traktor aus, welcher die Bestellkombination betreibt, trägt und bewegt. Insbesondere ist der Aktor als Hydraulikzylinder ausgebildet und steht mit einer, bevorzugt regelbaren, Druckquelle und /oder einem Druckspeicher in Verbindung.

Somit kann eine individuelle Einstellung des Werkzeugrahmens und somit der Ausbringwerkzeuge in Arbeitsstellung der Bestellkombination vorgenommen werden. Weiterhin kann die Achslastverteilung zwischen dem Fahrwerk, welches an dem Werkzeugrahmen oder seinem Mittelrahmen angeordnet ist, und dem Traktor, welcher die Bestellkombination mit seiner Hubeinrichtung trägt, individuell an die tatsächlichen Gegebenheiten angepasst werden.

Die Erfindung zeichnet sich insbesondere dadurch aus, dass eine Säkombination, bestehend aus einem Bodenbearbeitungsgerät und einer Verteilmaschine, durch Anordnung eines Fahrwerkes an einem beweglichen Werkzeugrahmen der Verteilmaschine eine wesentliche leichtere, einfachere und kostengünstigere Fahrwerksauslegung ermöglicht, als dieses bei Anordnung des Fahrwerkes direkt am Bodenbearbeitungsgerät der Säkombination der Fall wäre. Da das Fahrwerk lediglich zur Hinterachsentlastung des Traktors bei Kopplung der gesamten Säkombination erforderlich ist, nicht jedoch zum Einzel- oder Solobetrieb des Bodenbearbeitungsgerätes, kann dieses durch die lösbare Verbindung zwischen Bodenbearbeitungsgerät und Verteilmaschine an letzterem montiert bleiben und mit diesem gemeinsam abgestellt werden

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 eine an einen Traktor angebaute Bestellkombination in Arbeitsstellung in Seitenansicht,
Fig.2 die Seitenansicht aus Fig.1 in Transportstellung der Bestellkombination,
Fig.3 eine Perspektive der Bestellkombination aus Figur 1 und
Fig.4 eine Perspektive der Bestellkombination aus Figur 2

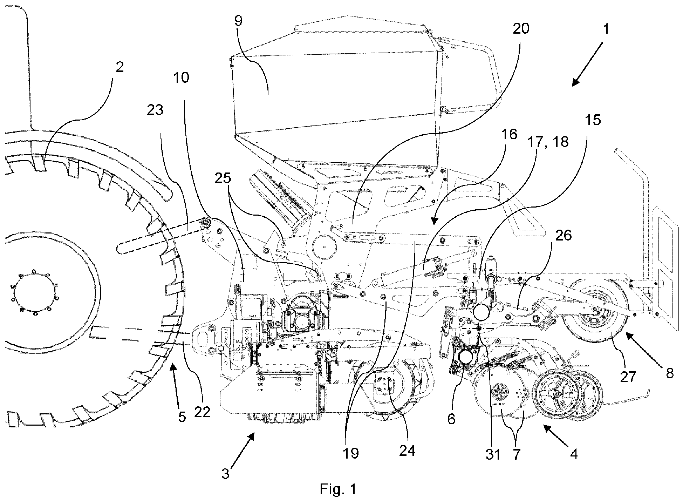

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen. Figur 1 zeigt eine an die Hubvorrichtung 5 eines Traktors 2 oder eines ähnlichen Fahrzeuges angebaute landwirtschaftliche Bestellkombination 1. Diese besteht aus einem als Kreiselegge mit angetriebenen, rotierenden Zinken ausgebildetem Bodenbearbeitungsgerät 3 und einer Verteilmaschine 4. Die Hubvorrichtung 5 ist als Dreipunktkraftheber ausgebildet und besteht aus einem Paar von Unterlenkern 22 sowie einem Oberlenker 23. Die Unterlenker 22 werden von einem nicht dargestellten Aktor des Traktors 2 betätigt und sind gelenkig mit dem Anbaurahmen 10 des Bodenbearbeitungsgerätes 3 und dem Traktor 2 verbunden. Oberhalb der Unterlenker verbindet der Oberlenker 23 als beidseitig gelenkig gelagerte Pendelstrebe den Traktor 2 und den Anbaurahmen 10 des Bodenbearbeitungsgerätes 3. Mittels der durch den Aktor betätigten Unterlenker 22 kann die Bestellkombination aus der dargestellten Arbeitsposition in eine ausgehobene Stellung zur Transportfahrt und für Wendemanöver ausgehoben werden. Hinter dem Bodenbearbeitungsgerät 3 ist eine als Walze oder Rolle ausgebildete Tiefenführung 24 zur variablen Arbeitstiefeneinstellung der Werkzeuge des Bodenbearbeitungsgerätes 3 mit diesem höhenverstellbar verbunden. Oberhalb und hinter dem Bodenbearbeitungsgerät ist eine als pneumatische Sämaschine ausgebildete Verteilmaschine 4 angeordnet. Diese besteht aus einem Materialbehälter 9 für auszubringendes, granulares oder flüssiges Material wie beispielsweise Dünger oder Saatgut sowie einem Werkzeugrahmen 6 mit daran angeordneten Ausbringwerkzeugen. Die Ausbringwerkzeuge sind als Scheibenschare mit dahinter angeordneten Andruckrollen ausgebildet und in der Höhe beweglich an dem Werkzeugrahmen 6 befestigt. Der feststehende Teil der Verteilmaschine 4 besteht aus einem Koppelrahmen 20 und dem darauf lastenden Materialbehälter 9. Der Koppelrahmen 20 der Verteilmaschine 4 ist mittels Fangtaschen und Bolzen 25 mit dem Anbaurahmen 10 des Bodenbearbeitungsgerätes 3 lösbar gekoppelt. Am hinteren Ende des Koppelrahmens 20 ist ein Lenkergestänge 16 angeordnet, welches bestehend aus zwei mit dem Koppelrahmen 20 verbundenen Lenkern 19 und an deren anderem Ende angeordnetem Mittelrahmen 15 eine Viergelenkanordnung bildet. Dies wird durch einen kombinierten Energiespeicher 17 und Aktor 18 betätigt. Mit dem Mittelrahmen 15 ist der Werkzeugrahmen 6 verbunden, welcher die Ausbringwerkzeuge der Verteilmaschine 4 trägt. Hinter dem Mittelrahmen 15 ist ein Fahrwerk 8 mittels eines Aktors 26 schwenkbar mit dem Mittelrahmen 15 und somit mit dem Werkzeugrahmen 6 mittelbar verbunden. Das Fahrwerk mit dem Rad 27 ist in einer oberen Stellung oberhalb der Ausbringwerkzeuge 7 durch den Aktor 26 ausgehoben und eröffnet den notwendigen Freiraum für die Beweglichkeit der Ausbringwerkzeuge 7 und den dahinter angeordneten Andruckrollen.

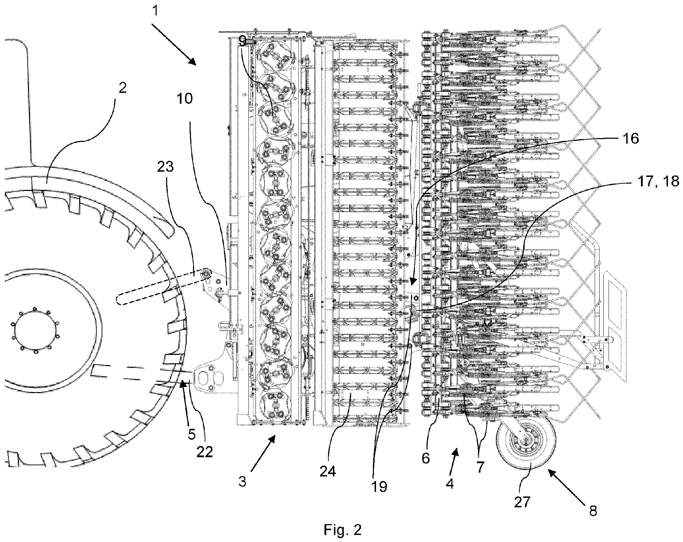

Figur 2 zeigt die gleiche, an den Traktor 2 angebaute Bestellkombination 1, jedoch in ausgehobener und eingeklappter Transportstellung. Hierzu sind einzelne Segmente des Bodenbearbeitungsgerätes 3 gemeinsam mit der daran befestigten Tiefenführung in eine aufrechte Position geklappt. Analog sind auch Segmente des Werkzeugrahmens 6 und der daran befestigten Ausbringwerkzeuge 7 ebenfalls, jedoch separat vom Bodenbearbeitungsgerät 3, in die aufrechte Stellung geklappt. Durch die Ausbringwerkzeuge 7 ist ein Teil des Fahrwerkes 8 verdeckt, welches nun in die untere Transportstellung geklappt ist und mit seinem Rad 27 Bodenkontakt hält. Durch die Beweglichkeit des Lenkergestänges 16 lastet das Gewicht des Werkzeugrahmens 6 und der daran befestigten Ausbringwerkzeuge 7 nun auf dem Rad 27 des Fahrwerkes 8, während das Gewicht des Bodenbearbeitungsgerätes 3 und des durch dieses in der Darstellung verdeckten Materialbehälters auf dem Hubwerk 5 des Traktors lastet und durch diesen getragen wird. Durch den als einstellbarer Aktor 18 ausgebildeten Energiespeicher 17 ist ein elastischer Ausgleich des Lenkergestänges 16 mit seinen Lenkern 19 zur Überwindung von Bodenunebenheiten gegeben.

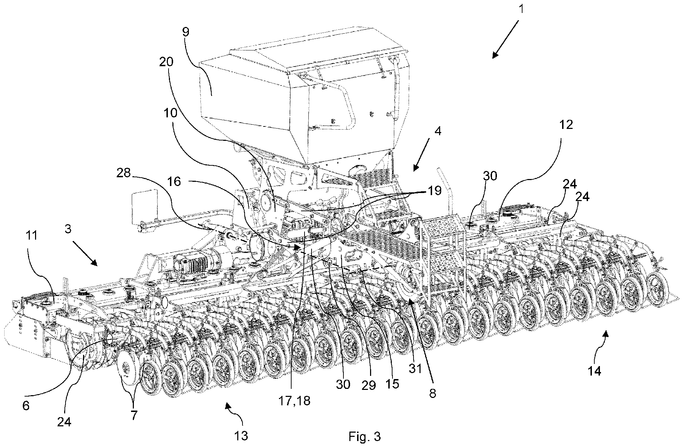

Figur 3 zeigt die Bestellkombination 1 aus Figur 1 in Arbeitsstellung von schräg hinten. Die Segmente 11 und 12 des Bodenbearbeitungsgerätes sind schwenkbar um horizontale Achsen 28 rechts und links vom Anbaurahmen 10 mit diesem verbunden. Ein durch den Anbaurahmen verdeckter Aktor betätigt und bewegt die beiden Segmente 11 und 12 gemeinsam mit den Tiefenführungen 24 von der dargestellten Arbeitsposition in eine aufrechte Transportposition. Unabhängig davon sind ein linkes 13 und rechtes Segment 14 des Werkzeugrahmens 6 mit den daran befestigten Ausbringwerkzeugen 7 um jeweils eine Achse 29 schwenkbar mit dem Mittelrahmen 15 über weitere Aktoren 30 betätigbar von der dargestellten Arbeitsposition in eine aufrechte Transportposition und umgekehrt einstellbar angeordnet. Der Materialbehälter 9 der Verteilmaschine 4 lastet über den Koppelrahmen fest auf dem Anbaurahmen 10 des Bodenbearbeitungsgerätes 3, ist mit diesem jedoch, wie zuvor beschrieben, zur Trennung der beiden Geräte 3, 4 lösbar verbunden. An dem Koppelrahmen ist rückseitig das Lenkergestänge 16 mit seinen Lenkern 19 beweglich angeordnet. An deren hinteren Ende befindet sich der Mittelrahmen 15, welcher die beiden Segmente 13, 14 des

Werkzeugrahmens 6 trägt. Durch den Aktor 18, welcher bevorzugt auch als Energiespeicher 17 wirkt, kann der Mittelrahmen 15 und somit der Werkzeugrahmen 6 in der Höhe zum Boden beziehungsweise zum vorlaufenden Bodenbearbeitungsgerät eingestellt werden. Hiermit kann die Eindringtiefe und der Auflagedruck der Ausbringwerkzeuge 7 auf die Bodenoberfläche variabel eingestellt werden. Das Fahrwerk ist in eine obere Position oberhalb der Ausbringwerkzeuge 7 verschwenkt und wird teilweise durch einen Laufsteg, welcher zur Befüllung des Materialbehälters dient, verdeckt.

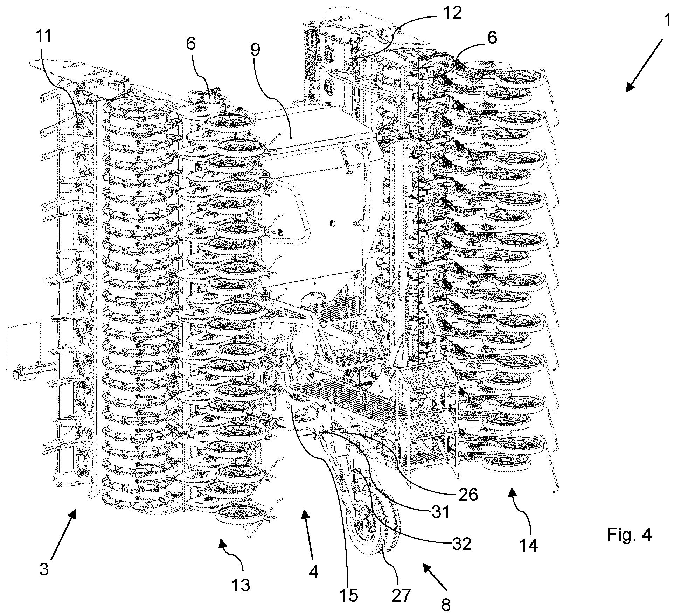

Figur 4 zeigt die Bestellkombination 1 aus Figur 2 in Transportstellung analog zu Figur 3 von schräg hinten. Die Segmente 11 und 12 des Bodenbearbeitungsgerätes 3 sowie die Segmente 13 und 14 des Werkzeugrahmens der Verteilmaschine 4 sind unabhängig voneinander in eine aufrechte Transportposition geklappt. Die Segmente 11 und 12 des Bodenbearbeitungsgerätes 3 schließen dabei die Kontur des Materialbehälters 9 ein. Das Fahrwerk 8, welches schwenkbar um die Achse 31 am Mittelrahmen 15 der Verteilmaschine 4 bzw. des Werkzeugrahmens 6 angeordnet ist, ist mittels des Aktors 26 in die abgesenkte Transportposition eingestellt, bei der das Rad 27 auf der Bodenoberfläche aufsteht. Das Rad 27 ist um die aufrechte Achse 32 lenkbar gelagert und kann bei Kurvenfahrt des Traktors seiner Fahrspur nachlaufen.

Es folgen vier Blätter mit Zeichnungen.

| | |
|---|---|
| 1 | Bestellkombination |
| 2 | Traktor |
| 3 | Bodenbearbeitungsgerät |
| 4 | Verteilmaschine |
| 5 | Hubvorrichtung |
| 6 | Werkzeugrahmen |
| 7 | Ausbringwerkzeuge |
| 8 | Fahrwerk |
| 9 | Materialbehälter |
| 10 | Anbaurahmen |
| 11 | Segment |
| 12 | Segment |
| 13 | Segment |
| 14 | Segment |
| 15 | Mittelrahmen |
| 16 | Lenkergestänge |
| 17 | Energiespeicher |
| 18 | Aktor |
| 19 | Lenker |
| 20 | Koppelrahmen |
| 21 | Achse |
| 22 | Unterlenker |
| 23 | Oberlenker |
| 24 | Tiefenführung |
| 25 | Bolzen |
| 26 | Aktor |
| 27 | Rad |
| 28 | Achse |
| 29 | Achse |
| 30 | Aktor |
| 31 | Achse |
| 32 | Achse |

## Patentansprüche

1. Landwirtschaftliche Bestellkombination (1) zum Anbau an die Hubvorrichtung (5) eines Traktors (2), welche ein Bodenbearbeitungsgerät (3) und eine Verteilmaschine (4) aufweist, wobei die Verteilmaschine (4) einen Koppelrahmen (20) aufweist, welcher lösbar mit dem Bodenbearbeitungsgerät (3) verbunden ist, wobei die Verteilmaschine (4) an einem Werkzeugrahmen (6) angeordnete Ausbringwerkzeuge (7) aufweist,
**dadurch gekennzeichnet,**
**dass** der Werkzeugrahmen (6) ein Fahrwerk (8) aufweist, wobei der Werkzeugrahmen (6) und/oder die Verteilmaschine (4) beweglich über den Koppelrahmen 20 mit dem Bodenbearbeitungsgerät (3) verbunden sind.

2. Landwirtschaftliche Bestellkombination (1) nach Anspruch 1,
**dadurch gekennzeichnet,**
**dass** die Verteilmaschine (4) zumindest einen Materialbehälter (9) aufweist, wobei der Materialbehälter (9) über den Koppelrahmen fest mit dem Bodenbearbeitungsgerät (3) und der Werkzeugrahmen (6) beweglich über den Koppelrahmen mit Bodenbearbeitungsgerät (3) oder dem Materialbehälter (9) verbunden ist.

3. Landwirtschaftliche Bestellkombination (1) nach Anspruch 1 oder 2,
**dadurch gekennzeichnet,**
**dass** das Bodenbearbeitungsgerät (3) und der Werkzeugrahmen (6) der Verteilmaschine (4) jeweils klappbare Segmente (11, 12, 13, 14) aufweisen.

4. Landwirtschaftliche Bestellkombination (1) nach einem der vorstehenden Ansprüche,
**dadurch gekennzeichnet,**
**dass** die Segmente (11, 12) des Bodenbearbeitungsgerätes (3) und/oder die Segmente (13, 14) des Werkzeugrahmens (6) den Materialbehälter (9) in aufrechter Transportposition einschließend angeordnet sind.

5. Landwirtschaftliche Bestellkombination (1) nach vorstehenden Ansprüchen,
**dadurch gekennzeichnet,**
**dass** das Fahrwerk (8) von einer Arbeitsposition in Transportposition und umgekehrt verstellbar ausgebildet ist.

6. Landwirtschaftliche Bestellkombination (1) nach vorstehenden Ansprüchen,
**dadurch gekennzeichnet,**
**dass** das Fahrwerk (8) zumindest ein lenkbares Rad aufweist.

7. Landwirtschaftliche Bestellkombination (1) nach vorstehenden Ansprüchen,
**dadurch gekennzeichnet,**
**dass** der Werkzeugrahmen (6) mittels eines Lenkergestänges (16) höhenverstellbar am Koppelrahmen (20) angeordnet ist.

8. Landwirtschaftliche Bestellkombination (1) nach vorstehenden Ansprüchen,
**dadurch gekennzeichnet,**
**dass** der Werkzeugrahmen (6) mittels eines Lenkergestänges (16) im Winkel einstellbar um eine parallel zur oder entlang der Erstreckung des Werkzeugrahmens (6) verlaufende Achse (21) am Koppelrahmen (20) angeordnet ist.

9. Landwirtschaftliche Bestellkombination (1) nach vorstehenden Ansprüchen,
**dadurch gekennzeichnet,**
**dass** das Lenkergestänge (16) zumindest einen Energiespeicher (17) aufweist, welcher den feststehenden Teil der Verteilmaschine mit dem beweglichem Werkzeugrahmen verbindet.

10. Landwirtschaftliche Bestellkombination (1) nach vorstehenden Ansprüchen,
**dadurch gekennzeichnet,**
**dass** das Lenkergestänge (16) zumindest einen Aktor aufweist, welcher den feststehenden Teil der Verteilmaschine mit dem beweglichem Werkzeugrahmen verbindet.
